Europäisches Patentamt

European Patent Office

Office européen des brevets

(11) Publication number: **0 160 566**
**B1**

# EUROPEAN PATENT SPECIFICATION

(45) Date of publication of patent specification: **04.07.90**

(51) Int. Cl.⁵: **G 01 N 27/28**

(21) Application number: **85303042.7**

(22) Date of filing: **29.04.85**

(54) Chemical assay apparatus.

(30) Priority: **30.04.84 JP 88185/84**

(43) Date of publication of application:
**06.11.85 Bulletin 85/45**

(45) Publication of the grant of the patent:
**04.07.90 Bulletin 90/27**

(84) Designated Contracting States:
**DE FR GB**

(56) References cited:
**EP-A-0 063 213**
**DE-A-3 228 647**
**DE-A-3 330 977**
**GB-A-2 077 439**

(73) Proprietor: **KURARAY CO., LTD.**
**1621 Sakazu**
**Kurashiki-City Okayama Prefecture 710 (JP)**

(72) Inventor: **Nakamura, Michihiro**
**376-5 Makabe Soja-City**
**Okayama Pref (JP)**
Inventor: **Yano, Makoto**
**1-2-40 Hamanochaya Kurashiki-City**
**Okayama Pref (JP)**
Inventor: **Ikeya, Hidehiko**
**c/o Ranpu-Ryo 1652-1 Sakazu**
**Kurashiki-City Okayama Pref (JP)**
Inventor: **Tsurumi, Hiroshi**
**1480-172 Nishizaka Kurashiki-City**
**Okayama Pref (JP)**
Inventor: **Kusudo, Osamu**
**1652-2 Sakazu Kurashiki-City**
**Okayama Pref (JP)**
Inventor: **Hamamoto, Yoshito**
**2-2-34 Showa Kurashiki-City**
**Okayama Pref (JP)**

(74) Representative: **Crampton, Keith John Allen**
**et al**
**D YOUNG & CO 10 Staple Inn**
**London WC1V 7RD (GB)**

Courier Press, Leamington Spa, England.

## Description

The present invention relates to apparatus for measuring the quantities of chemical substances contained in a solution to be assayed.

The apparatus of the present invention can advantageously be used, when thermally sterilized, for monitoring the living body.

In the physiological and medical fields, measurements are frequently made of the concentration of substances contained in body fluids, especially blood, for example ions such as the hydronium ion and the ions of sodium, potassium, calcium and chloride, gases such as oxygen and carbon dioxide, sugar such as glucose and lactose, and other chemical substances such as hormones, enzymes, and antibodies. Hitherto such measurements have involved the use of various types of potentiometric electrodes, such as glass electrodes, coated-wire electrodes, and chemically modified metal electrodes. Glass electrodes in particular are widely used, since they can be adapted to respond selectively to various kinds of chemical substances by changing the composition of the glass membrane or by coating the membrane with a chemically sensitive film. However, miniaturization of a glass electrode for the determination of the local amount of chemical substances in the tissue of a living body results in reduced strength and increased resistance of the glass membrane, which naturally leads to decreased response speed.

As a miniature ion sensor capable of solving this problem with such glass electrodes, an ion sensor utilizing the field effect of semiconductors was proposed in U.S. Patent Specifications US—A—4,020,830 and US—A—4,218,298. This ion sensor is called ISFET (Ion-Sensitive Field Effect Transistor). The boundary electric potential appearing on the surface of the ion-sensitive membrane of an ISFET is dependent upon the activity of the specific ions contained in the solution to be assayed. A change in the boundary electric potential leads to a corresponding change in the conductivity of the channel under the ion-sensitive membrane, if the electric potential of the solution is kept constant by means of a reference electrode. Where this principle is applied in detecting a boundary electric potential, the problem of electrode resistance as experienced with conventional glass electrodes is solved and the output impedance involved is low by virtue of the impedance-converting function of the ISFET; therefore, any high-input impedance amplifier as an external circuit is not required. This type of ion sensor is suitable for mass production and can be miniaturized since it involves little if any problem of electrode resistance, and can therefore respond quickly when inserted into a living body. Moreover, the IC technique used permits integration (multiplexing) of various types of ion sensors on one silicon chip.

Because of these characteristics the ISFET is attracting wide attention as a sensor for monitoring the quantity of chemical substances in a living body by inserting it into the tissue of the body. Further, the ISFET can be adapted to respond to various kinds of substances by modifying its ion-sensitive membrane. For example, there are the following types of ISFET; a pH sensor using silicon nitride, alumina, or tantalum pentoxide for the sensitive membrane; a cation (e.g. $Na^+$ or $K^+$) sensor using an inorganic glass membrane; a chloride ion sensor having a sensitive membrane of an inorganic compound such as $AgCl$; an ion (e.g. $Na^+$, $K^+$ or $Ca^{++}$) sensor having a sensitive membrane formed of a polymer matrix, such as polyvinyl chloride or silicone resin, with, for example, crown ether or phosphate added or fixed to it; and such other sensors for measuring substrates and immune substances as enzyme sensors and immunosensors, which comprise a combination of any of the above named sensors and an enzyme membrane, an antibody or antigen.

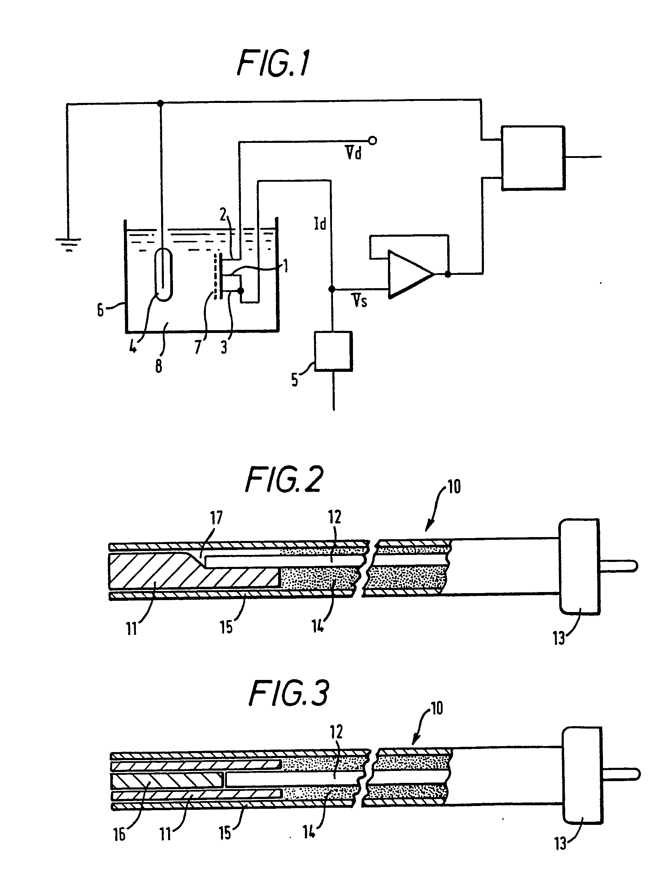

In the circuit of Figure 1 of the accompanying drawings, which is suitable for measuring the concentration of ions in a solution 8 to be assayed, an ISFET 1, togethwr with a liquid-junction reference electrode 4, is immersed in a solution in a receptacle 6. To a drain terminal 2 of the ISFET is connected the positive potential of a voltage source Vd, and to its source terminal 3 is connected a constant current circuit 5. The ISFET operates through a source follower circuit thus formed. Any change in the conductivity of the channel under the ion-sesnsitive membrane that results from a change in the boundary electric potential between the membrane 7 and the solution 8 is drawn in terms of source potential Vs. Since the source potential Vs is in linear relation to the logarithm of ion concentration, it is possible to measure the concentration of ions contained in the solution being assayed by determining the source potential Vs.

In order to measure the quantity of chemical substances contained in the solution being assayed by using an ISFET or a conventional glass electrode as a potentiometric electrode for chemical-substance measurement, there must be a reference electrode having a constant potential in its interface with the solution being assayed regardless of the composition of that solution. Therefore, the reference electrode is of such a construction that the solution to be assayed may be brought into contact with an internal solution housed in a closed tube and having a constant composition, through a liquid junction provided at a front end of the tube. In the internal solution within the tube is immersed an internal electrode such as an Ag-AgCl electrode.

A reference electrode used together with ion sensors, such as ISFET's, particularly for the purpose of living-body monitoring, must be miniaturized enough to be insertible in a living body and must be steam-autoclavable. In the case of a combined sensor having an ion sensor and a reference electrode housed together in one tube, it is necessary that the reference electrode be further miniaturized. However, the smaller the reference electrode, the less is the quantity of the internal solution housed in the tube. In a prolonged mesaurement operation, therefore, it is very important to prevent outflow of the internal solution, and in order to reduce this, there has been proposed a reference electrode having its liquid junction composed of an acetyl cellulose membrane or ceramic, which is permeable to water and ions and yet retards their diffusion. Such reference electrodes have the advantage that the outflow of the internal solution during a measurement operation can be reduced, but on the other hand the internal solution flows out in the course of steam autoclaving, which is usually carried out in a high-pressure steam atmosphere at about 120°C for about 20 minutes, and moreover air dissolved in the internal solution adheres to the surface of the internal electrode in the form of bubbles or interrupts the conduction between the internal electrode and the solution being assayed, which leads to an increased electric resistance and to instability of the reference electrode potential.

In order to overcome these difficulties, an internal solution that has been steam-autoclaved before use may be placed in the tube in which the internal electrode is housed. However, this practice is not desirable since it involves the possibilities that the effect of sterilization may be impaired unless great care is used when the sterilized internal solution is placed into the tube, and moreover that air may be mixed into the internal solution when it is so placed. It is also known that a sol, e.g. of agar-agar, gelatine, polyvinyl alcohol or polyhydroxymethyl methacrylate, or a hydrogel, e.g. of hyperfine silica, can be used for the internal solution in order to prevent the outflow of the internal solution during measurement. Reference electrodes containing such a sol or hydrogel as the internal solution have maintenance difficulties, although they are effective to some extent in preventing outflow of the internal solution in the course of measurement and also in preventing bubble generation in the internal solution during storage. Further, sols of organic polymers such as agar-agar, gelatine, polyvinyl alcohol and polyhydroxy methacrylate, when heated, produced a potassium-permanganate-reducing substance, which may be hazardous to living bodies. Polyhydroxyethyl methacrylate sol cannot be used as the internal solution because it is liable to separate into a polymer phase and an aqueous phase upon heating. Hyperfine silica hydrogel is so high in viscosity that it is difficult, if not impossible, to put the gel into the tube.

In view of these facts, the present inventors proposed in Japanese Published Unexamined Patent Application No. 204363/1983 a steam autoclavable, miniaturized liquid-junction type reference electrode having its internal solution gelled by a high polymer. This electrode comprises a tube, an internal solution housed in the tube and gelled by 2 to 10% by weight of polyvinyl alcohol and 0.1 to 2% by weight of a crosslinking agent that is a compound of titanium, zirconium or vanadium, an internal electrode immersed in the internal solution, and a liquid junction provided in the front end portion of the tube and communicating between the inside and outside of the tube.

However, subsequent studies made with this reference electrode, in which the polymeric gel was used as a holder for the internal solution, revealed that a number of problems had yet to be solved, as enumerated below:—

(1) During storage or steam autoclaving, bubbles in the polymeric gel aggregate into larger bubbles, whereby the electric connection between the internal electrode and the solution to be assayed is broken.

(2) Use of the polymeric gel as the holder for the internal solution causes a large liquid junction potential, with the result that the potential of the reference electrode varies according to the composition of the solution to be assayed.

(3) The manufacture of the reference electrode is much complicated, because the internal solution has to be gelled by the polymer and crosslinking agent in the reference electrode.

DE—A—3228647 describes a reference electrode in which the internal solution is contained within the pores of a polymeric material by incorporating the soluting during polymerisation of the polymeric material as the porous structure is formed.

In accordance with the present invention, apparatus for measuring quantities of one or more chemical substances contained in a solution to be assayed comprises at least one potentiometric electrode capable of responding selectively to a specific chemical substance, and a liquid-junction reference electrode including a tube, a prefabricated porous thread member housed in a front end opening of the tube and having a pore capacity of 0.2 cm³/g or more and at least the surface of which is hydrophilic, a silver-silver chloride wire housed in the tube, the wire at at least one end being in contact with the thread member and extending along the tube and being connected to a connector at the other end opening of the tube, at least the front portion of the tube being filled with an electrically insulating resin for fixing both the silver-silver chloride wire and the thread member by contact with them and for closing the tube, and an internal solution having been sucked into the pores of the prefabricated thread member and retained by capillarity in the porous thread member.

Various preferred features and embodiments of the invention are described below.

By using apparatus in accordance with embodiments of the invention, in which the two electrodes may be housed in one tube, it is possible to avoid breaking electric connections during steam autoclaving and to avoid elution of substances harmful to living bodies as toxic substances, pyrogens, and potassium-permanganate-reducing substances.

In the accompanying drawings, which are illustrative:—

Figure 1 is a circuit diagram showing an electric circuit suitable for measuring the quantities of chemical substances in a solution to be assayed by means of a chemical-substance-measuring apparatus including a chemical-substance-sensitive sensor using an ISFET as a potentiometric electrode, and a liquid-junction reference electrode;

3

Figures 2 and 3 are sectional views showing a liquid-junction reference electrode used in one embodiment of chemical-substance-measuring apparatus according to the invention;

Figures 4 and 5 are sections showing another embodiment of chemical-substance-measuring apparatus, in which the chemical-substance-sensitive sensor and the liquid-junction reference electrode are housed in a single tube; and

Figure 6 is a graph showing a performance comparison of the liquid-junction reference electrode used in an embodiment of apparatus of the invention with a conventional liquid-junction reference electrode.

The circuit in Figure 1 of the drawings has been described above.

Figures 2 and 3 are sections through a liquid junction reference electrode used in an embodiment of a chemical-substance-measuring apparatus according to the invention. Reference electrode 10 is used in conjunction with the potentiometric electrode. The reference electrode comprises a tube 15, a prefabricated porous thread member 11 housed in the front end opening of the tube and having hydrophilic properties at least on its surface, a silver-silver chloride wire 12 housed in the tube so that at at least one end the wire is in contact with the thread member and that extends along the tube and is connected to a connector 13 at the other end opening of the tube, an electrical insulating resin 14 in at least at the front end portion of the tube for fixing both the silver-silver chloride wire and the thread member and for closing the tube, and an internal-solution having been sucked into the prefabricated thread member and retained by suction in the porous thread member.

The tube 15 is conveniently formed of a waterproof material, usually a polyamide, such as nylon 6, nylon 11, or nylon 12, or a polyester, polypropylene, polyvinyl chloride or rubbery resin, such as a silicon rubber, a urethane rubber or a polyisoprene rubber.

The porous thread member may be composed of a hydrophilic polymer, e.g. polyvinyl alcohol, ethylene-vinyl alcohol copolymer or hydroxyethyl methacrylate; a reaction product of such a polymer with, for example, glutaraldehyde or formaldehyde; polyacetyl cellulose, or polyacrylonitrile. Also, porous thread materials composed of hydrophobic polymers, such as polypropylene, polytetrafluoroethylene, polyethylene, polystyrene, and polysulphone, but which are hydrophilically surface-treated, may be used. Among hydrophilic treatment techniques available are chemical treatments, e.g. sulphonation, and treatment with materials such as ethanol and surface-active agents. Hydrophilic treatment of a porous thread member made of a hydrophobic polymer should be effected to such an extent as to allow water to be spotaneously attracted into the pores of the thread member by capillarity. The porous thread member must have a porosity such that its pore capacity is 0.2 cm$^3$/g or more to assure that the internal solution is retained in the pores by capillarity. A pore capacity of less than 0.2 cm$^3$/g is undesirable, because it is insufficient to retain the internal solution, which means that the internal resistance of the reference electrode is too large. The term "pore capacity" referred to herein means a value resulting from the division of the total pore capacity (cm$^3$) as measured by a mercury penetration porosimeter, by the weight of the sample (g).

The thread member may be a monofilament, multifilament, or staple fibre, in single form as such, in bundle or twine form, or in hollow-fibre form. The thread member generally has pores of from 0.01 to 10 µm in mean diameter, substantially evenly distributed over its cross section. The diametral size of such pores within the stated range may increase or decrease, stepwise or continuously, in the inward direction from the fibre surface. The thread member may have a very thin skin layer on its surface. If the pore diameter is more than 10 µm, the mechanical strength of the porous thread member is lower and the diffusion of chlorine ions in the internal solution is faster, so that the potential of the reference electrode is likely to drift when there is a change in the chlorine ion concentration in the solution to be assayed. Conversely, if the pore diameter is less than 0.01 µm, the diffusion of ions in the internal solution is excessively slow and the internal resistance of the reference electrode is greater, which results in greater induced noise.

For the purpose of reference electrode miniaturization, it is desirable that the outer diameter of the thread member should be as small as possible. Where a hollow fibre is used, one having an outer diameter of 50 to 3000 µm and a membrane thickness of 10 to 500 µm is normally used.

The porous thread member may be produced by conventional spinning techniques. For example, a polyvinyl alcohol-based porous hollow fibre may be produced as disclosed in Japanse Published Unexamined Patent Application No. 21420/1977. A porous polysulphone hollow fibre may be produced as disclosed in Japanse Published Unexamined Patent Application No. 91822/1983. These techniques make it possible to continuously produce porous hollow fibres having good heat resistance and high mechanical strength and that can limit the elution of potassium-permanganate-reducing substance during steam autoclaving to a level below the allowable limit.

The foresaid thread member is housed in a front end opening of the tube. Desirably, the thread member should be placed in the tube so that its front end is substantially level with the front end of the tube. If the thread member inserted in the tube is too short, the internal solution retained in the thread member may diffuse and flow out into the solution to be assayed. Therefore, the thread member must have such a length that such diffusion and outflow of the internal solution can be reasonably prevented. The length can be suitably determined according to the configuration of the thread member. For example, in the reference electrode shown in Figure 2, if the thread member is of 0.3 mm diameter, the length of the thread member inserted in the tube should usually be more than 1.5 cm. Where a hollow fibre 11 is used for

4

the thread member as shown in Figure 3, it is desirable that a porous monofilament 16 be inserted in the front end opening of the hollow fibre or throughout the length of the hollow portion of the fibre in order to close the hollow portion. Where a hollow fibre having an inner diameter of 50 μm or less is used and the front end of the silver-silver chloride wire is spaced apart by more than 2 cm from the liquid junction, any abrupt change in the chlorine ion concentration of the internal solution, that is, any abrupt change in the potential of the silver-silver chloride electrode, can be prevented without the necessity of the hollow portion being closed up.

One end of the silver-silver chloride wire housed in the tube must be in contact with the thread member, e.g. as in Figure 2. In Figure 3, the end of the wire is inserted in the hollow portion of the hollow fibre so that its end is in contact with the inner surface of the hollow fibre. The wire extends along the tube and is connected at the other end opening of the tube to the connector. Where a short wire is used, a lead wire may be connected to it at one end, the other end being in contact with the thread member so that the lead wire extends along the tube and is connected at the other end opening of the tube to the connector.

The electrical insulating resin 14 for fixing the wire and thread member and for stopping at least the front end portion of the capillary tube may be, e.g. epoxy resin or silicone resin or a mixture of them.

The internal solution retained in the thread member is usually saturated KCl solution if ordinary pH measurement is intended. For the purpose of medical measurements, and more particularly where body fluids, such as blood, are to be assayed, the internal solution must be of a composition suitable for the purpose. The internal solution must not be liable to liquid junction potential difference, must contain no ion to which the ion sensor may respond, because if internal solution flowing out from the thread member changes the ion activity of the solution to be assayed, errors will occur, and must not be likely to react with the solution to be assayed and to cause harm to living bodies.

The liquid junction potential difference decreases as the mobilities of positive and negative ions moving in the liquid junction where the solution to be assayed is in contact with the thread member approach one another. It is thus desirable that the positive and negative ions in the internal solution be of equal mobility and that their concentration in the internal solution be greater than that in the solution to be assayed. Among electrolytes, in which the positive and negative ions are equal in mobility are KCl and $NH_4Cl$.

In the case of blood assaying, the outflow of $K^+$ is harmful to the living body. If the internal solution is thicker than the blood, contraction of blood corpuscles and/or coagulation of proteins may take place because of the difference in penetration pressure. For this reason, and in order to equalize the penetration pressure of the internal solution with that of the blood, physiological salt water (0.15$M$ NaCl solution) is used. Although $Na^+$ and $Cl^-$ differ from each other in mobility, the salt concentration of the blood is close to 0.15$M$ NaCl and accordingly there will occur no intersolution potential difference.

The reference electrode of the invention may be immersed, at its front end-portion, in the internal solution so that the internal solution is retained in the thread member. Only after that is it put in use. In this case, attraction of the internal solution into the thread member is accomplished by capillarity of the micro-pores of the thread member.

The reference electrode can be miniaturized. For example, by using a porous thread member having an outer diameter of 0.2 mm and a length of 2 cm, a silver-silver chloride wire having a diameter of 0.1 mm, and a tube of silicone rubber having an inner diameter of 0.3 mm and an outer diameter of 0.4 mm, which is insertable into a living body, it is possible to obtain a very slender reference electrode.

In the reference electrode of the invention, the internal solution (an electrolyte solution containing chlorine ions) is retained in the micro-pores of the porous thread member, and the porous thread member is held in close contact with the silver-silver chloride electrode and extends up to the liquid junction port; therefore, though it is of a miniature size, the electric conductivity between the silver-silver chloride electrode and the solution to be assayed cannot be broken. Even if bubbles should be included in the space formed at the joint between the silver-silver chloride wire and the thread member (e.g. at 17 in Figure 2), continuity is constantly held between the wire and the solution to be assayed, because the thread member is in close adhesion at one end with the wire and is in contact at the other end with the solution to be assayed at the liquid junction port. The pores of the porous thread member retain the internal solution by virtue of their capillarity, so any breakage of continuity is very unlikely. Even if many small bubbles develop in the pores, the individual bubbles are prevented from movement by the pore walls and are therefore unlikely to grow into bubbles of such size as may break the conductivity between the wire and the solution to be assayed. The reference electrode uses a prefabricated porous thread member as a holder for the internal solution, and it is therefore very simple to manufacture it. In the known type of reference electrode using a crosslinked polymer gel as a holder for the internal solution, cross-linking takes place only after a solution containing the polymer and a crosslinking agent is poured into the reference electrode. With known reference electrodes, therefore, proper control of the crosslinking reaction is difficult and the assembly work involved is very complicated. In contrast to this, use of a porous filament or yarn provides distinct advantages. Since such a filament or yarn is produced by spinning on a mass production basis, quantities of such filament or yarn having uniform performance quality are readily available. Furthermore, where a porous thread member is used as a holder for the internal solution, the liquid junction potential difference involved, if any, if very small compared with the case where a polymer gel is used, though the reason is unknown. Accordingly, it has also been found that the use of such a thread member can minimize measurement errors with the reference electrode. For example, if a hydrophilic polymer sol or gel is used as an internal solution holder, an abnormal potential of more than 5 mV develops in a solution containing borate (e.g. a buffer solution of 9.18 pH), whereas in the case of a porous thread member being used as an internal solution holder, the abnormal potential is less than 3 mV.

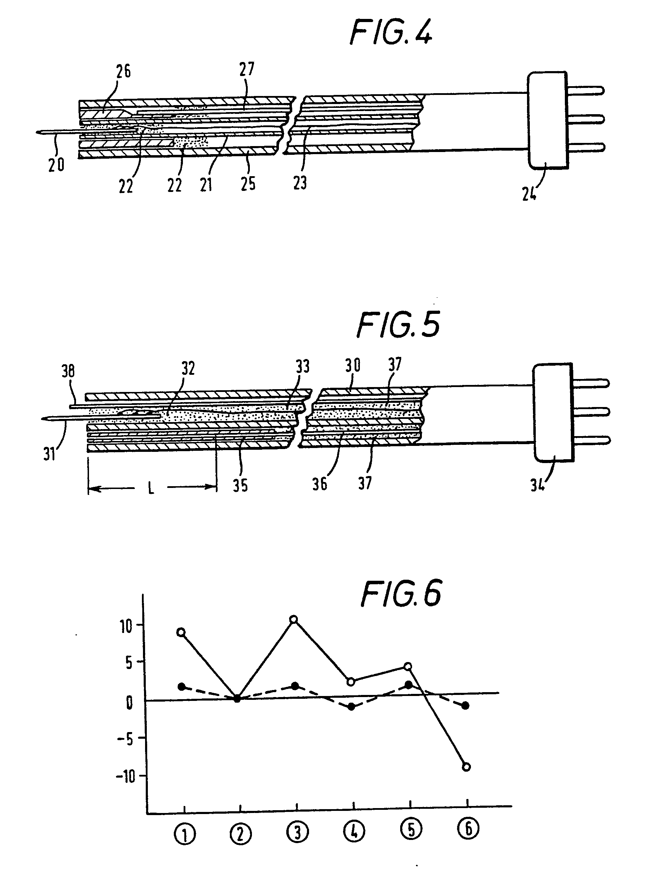

In the embodiment of Figure 4, the gate portion of an ISFET 20 projects outwardly from the front end of a first tube 21, and the electrode portion of the ISFET is fixedly buried in a waterproof electrical insulating resin 22 which closes the front end opening of the first tube. A lead wire 23, connected to the electrode portion of the ISFET, extends along the tube and is connected to a connector 24 at an opening of the tube at the other end. The first tube 21 to which the ISFET 20 is fixed is inserted in a second tube 25. A porous hollow fibre 26 is housed in the front end portion of a cavity defined by the two tubes. In the cavity defined by the two tubes is housed in silver-silver chloride wire 27, which is in contact at one end with the hollow fibre 26 and is connected at the other end to the connector 24 at the opening at the other end of the tubes. The entire interior space of the first tube and also the entire cavity defined by the first and second tubes may be filled with the electrical insulating resin. If an ISFET having two or more sensor gates is used, it is possible to provide an apparatus capable of measuring a corresponding number of chemical substances.

In the embodiment of Figure 5, a tubular body has at least two independent cavities, e.g., a double lumen catheter 30. The gate portion of an ISFET 31 projects from the catheter at the front end of one cavity and the electrode portion of the ISFET is fixedly buried in a waterproof electrical insulating resin 32, which closes the front end opening of the cavity. A lead wire 33, connected to the electrode portion of the ISFET, extends along the cavity and is connected to a connector 34 at the other end opening of the catheter. A porous hollow fibre 35 is housed in another cavity of the catheter at its front end portion. In the hollow space of the hollow fibre is inserted one end portion of a silver-silver chloride wire 36. The wire extends along the cavity and is connected to the connector 34 at the other end of the catheter. In Figure 5, a porous hollow fibre is used and there is provided a sufficient length (L) between the front opening of the hollow fibre and the front end of the wire inserted in the hollow space of the hollow fibre; and therefore, the front opening of the hollow fibre is not closed. Further, in Figure 5, the cavities of the catheter are filled with masses of electrical insulating resin 37. If a tubular body having three or more independent cavities is used and two or more ISFETS capable of responding selectively to different chemical substances are each housed in one of the cavities, it is possible to provide an apparatus capable of measuring two or more chemical substances. Guard electrode 38 connects the solution to be assayed with a source follower circuit to eliminate alternating-current-induced troubles and thus permit accurate measurement. Where an ISFET is used as a potentiometric electrode, alternating-current-induced troubles, such as entry into the sensor circuit through a grounding conductor of alternating current from an indoor AC connection or leaking along the floor, may cause fluctuations in the source potential and thus make it difficult to perform accurate measurement of ion concentrations. Especially where a miniaturized liquid-junction type reference electrode involving high impedance, e.g. 100 kΩ or more is used, or where the drain current is 30 μA or below, such alternation-current-induced troubles may be considerable and thus the measurement operation may be greatly affected.

If the guard electrode is connected to an isolation circuit, external signals, chiefly of an alternating current flowing in living bodies, do not flow in the sensor circuit, which permits consistantly accurate measurement. A conductive metal such as platinum or silver is used for the guard electrode, which, together with the ISFET, is housed in the cavity. A guard wire, connected to the guard electrode, extends along the cavity and is connected to the connector at the other end of the catheter.

As above described, a porous thread member having a pore capacity of more than 0.2 cm³/g and at least the surface of which is hydrophilic is used as a holder for the internal solution of the liquid-junction reference electrode incorporated in the apparatus according to the present invention. Accordingly, this electrode is free from the possibility of discontinuity between the internal solution and the external solution to be assayed and assures improved stability and accuracy. In addition to its excellent performance characteristics, the reference electrode is easy to assemble and is of a miniaturized type. Therefore, the reference electrode, when used in conjuncton with a potentiometric electrode, serves as a very practical chemical-substance-measuring apparatus for measuring the quantities of chemical substances in a living body.

The following Examples illustrate the invention.

Example 1

A porous hollow fibre was produced in accordance with the following procedure. 8 kg of polyvinyl alcohol having a mean polymerization degree of 1700, 4 kg of polyethylene glycol having a molecular weight of 1,000, 160 g of boric acid, and 30 g of acetic acid were dissolved into 50 l of hot water. The resulting solution was discharged through an annular nozzle into a coagulating bath containing 80 g/l of caustic acid and 230 g/l of Glauber's salt, and thus a hollow fibre was obtained. The hollow fibre was subjected to crosslinking treatment in a bath containing 0.5 g/l of glutaraldehyde and 3 g/l of hydrochloric acid at 50°C for 2 hours, and then to heat treatment in hot water at 100°C for one hour. The hollow fibre so treated was washed in water. The polyvinyl alcohol hollow fibre had an outer diameter of 0.5 mm and an inner diameter of 0.3 mm. An electronographic examination of a section of the hollow fibre showed that there were pores of 0.02 to 2 μm diameter evenly distributed throughout the cross section. The pore capacity of the fibre as determined by a mercury porosimeter was 0.23 $cm^3/g$.

A silicone rubber tube having an inner diameter of 0.5 mm and an outer diameter of 1.0 mm was swelled with *n*-hexane, and the porous polyvinyl alcohol hollow fibre and a silver-silver chloride wire having a diameter of 0.25 mm were inserted into the tube. As illustrated in Figure 3, the silver-silver chloride wire was inserted into the hollow portion of the hollow fibre. The tube was removed from the *n*-hexane, and the hexane was allowed to evaporate at room temperature. The distance between the front end of the silver-silver chloride wire and the liquid-junction port was fixed at 2 cm. A silicone RTV was poured into the tube through an opening at another end of the tube in Figure 3, and the silver-silver chloride wire, the hollow fibre, and the silicone rubber tube were fixed. Then, the front end portion of the silicon rubber tube was immersed in a physiological salt solution to allow the physiological salt solution to be attracted into the hollow fibre by capillarity. For the reference electrode, inter-solution potential difference values were measured with respect to the following six types of solutions:

0.025M $KH_2PO_4$, 0.025M $Na_2HPO_4$;
0.025M $KH_2PO_4$, 0.025M $Na_2HPO_4$, 0.154M NaCl;
0.0087M $KH_2PO_4$, 0.0304M $Na_2HPO_4$;
0.0087M $KH_2PO_4$, 0.0304M $Na_2HPO_4$, 0.154M NaCl;
0.010M $Na_2B_4O_7$; and
0.010M $Na_2BO_7$, 0.154M NaCl.

In each solution at 37°C, the potential of the reference electrode was measured with reference to Radiometer Co. standard electrode Model K8040. The measurement results were plotted by black dots in Figure 6. As shown, in the six solutions, the potential of the reference electrode varies depending chiefly upon the presence or absence of chlorine ion, but the range of such variations is less than approximately 3 mV. The noise level of this reference electrode was about ±0.2 mV. During steam autoclaving of the reference electrode no occurrence of discontinuity was seen. When the reference electrode thus obtained was left to stand for 10 minutes at room temperature, and then bubbles were intentionally included into the interior space of the hollow fibre, no change in the performance and stability of the reference electrode was observed. Front end portions, 10 cm, of 10 pieces of such reference electrodes were encapsulated, together with 300 ml of water, in a sealed tube and heated at 121°C for 30 minutes. Then the internal solutions were withdrawn and subjected to various tests, such as elution test, acute toxicity test, pyrogen test, haemolysis test, and intraskin reaction test. The results of all these tests were found satisfactory.

Comparative Example 1

A porous polyvinyl alcohol hollow fibre was produced in same manner as in Example 1, except that 2 kg instead of 4 kg of ethylene glycol was used in the spinning solution. The hollow fibre obtained had a pore capacity of 0.17 $cm^3/g$. The outer and inner diameters of the hollow fibre were identical with those in Example 1. This hollow fibre was used to fabricate a reference electrode similar to the one fabricated in Example 1. Intersolution potential difference measurements made with this electrode showed results similar to those in Example 1. However, the noise level was about ±1 mV.

Comparative Example 2

A silver-silver chloride wire having a diameter of 0.25 mm was fixed with silicone RTV in a silicone rubber tube having an inner diameter of 0.5 mm and an outer diameter of 1.0 mm. An aqueous solution containing 5 wt.% of polyvinyl alcohol (with a polymerization degree of 1700), 0.5 wt.% of titanium lactate as a crosslinking agent, and 0.9 wt.% (0.154M) of sodium chloride was injected by a syringe through the end opening of the silicone rubber tube. Then, the composite was allowed to stand overnight in physiological salt water for completion of the cross-linking reaction. The potential of the reference electrode relative to that of the standard electrode K8040 was measured in same manner as in Example 1. The measurement results are shown by white circles in Figure 6. As is apparent from the results shown, this reference electrode is subject to considerable inter-solution changes in potential if the voltage is in the vicinity of 10 mV. Further, when the reference electrode was steam autoclaved, bubbles of the same order in size as the inner diameter of the silicone rubber tube were observed in the polyvinyl alcohol, and potential instability developed.

**Claims**

1. Apparatus for measuring quantities of one or more chemical substances contained in a solution to be assayed, comprising at least one potentiometric electrode (20, 31) capable of responding selectively to a specific chemical substance, and a liquid-junction reference electrode (10) including a tube (15, 25, 30), a prefabricated porous thread member (11, 26, 35) housed in a front end opening of the tube (15, 25, 30) and having a pore capacity of 0.2 $cm^3/g$ or more and at least the surface of which is hydrophilic, a silver-silver chloride wire (12, 27, 36) housed in the tube (15, 25, 30), the wire (12, 27, 36) at at least one end being in contact with the thread member (11, 26, 35) and extending along the tube and being connected to a connector (13, 24, 34) at the other end opening of the tube, at least the front end portion of the tube being filled with an electrically insulating resin for fixing both the silver-silver chloride wire (12, 27, 36) and the thread member (11, 26, 35) by contact with them and for closing the tube (15, 25, 30), and an internal solution having been sucked into the pores of the prefabricated thread member (11, 26, 35) and retained by capillarity of the said member.

2. Apparatus according to Claim 1 in which the potentiometric electrode is an ion-sensitive field effect transistor having a sensor gate.

3. Apparatus according to Claim 1 in which the potentiometric electrode is a multiple ion sensitive field effect transistor having two or more sensor gates.

4. Apparatus according to any one of Claims 1 to 3 in which the porous thread member (11, 26, 35) is composed of a hydrophilic polymer.

5. Apparatus according to any one of Claims 1 to 3 in which the porous thread member (11, 26, 35) is a hollow fibre and the front end portion of the silver-silver chloride wire is inserted in and fixed by the hollow portion of the hollow fibre.

6. Apparatus according to Claim 5, in which the hollow fibre has a membrane of 10 to 500 μm in thickness and micropores of 0.02 to 2 μm in mean diameter, substantially evenly distributed throughout its cross section.

7. Apparatus according to any one of Claims 1 to 6 in which tme potentiometric electrode is housed in one of at least two independent cavities in a tubular body (25, 30) and has a chemical-substance-measuring zone (20, 31) projecting outwardly from one end of the tubular body, a lead wire (23, 33) connected at one end to the electrode and extending along said cavity to its other end, which is connected to a connector (24, 34) at an opening of the tubular body at its other end, and the electrode is filled with an electrical insulating resin (22, 32) at least at a lead wire junction for closing the cavity; and in which the or another cavity of the tubular body serves as the tube including the liquid-junction reference electrode.

8. Apparatus according to Claim 7 in which each of two or more potentiometric electrodes capable of responding selectively to different chemical substances is housed in one of the cavities of the tubular body.

## Patentansprüche

1. Apparat zur quantitativen Bestimmung einer oder mehrerer in einer zu untersuchenden Lösung enthaltener Substanzen mit mindestens einer auf eine spezielle chemische Substanz selektiv ansprechenden potentiometrischen Elektrode (20, 31) und einer mit der Flüssigkeit in Kontakt kommenden Bezugselektrode (10), die ein Rohr (15, 25, 30), ein in einer vorderen Stirnöffnung des Rohrs (15, 25, 30) angeordnetes vorgefertigtes poröses Fadenelement (11, 26, 35), das ein Poren-Fassungsvermögen von 0,2 cm³/g oder mehr aufweist und bei dem mindestens die Oberfläche hydrophil ist, einen in dem Rohr (15, 25, 30) angeordneten Silber-Silberchlorid-Draht (12, 27, 36), der an mindestens einem Ende mit dem Fadenelement (11, 26, 35) in Kontakt steht, durch das Roh verläuft und mit einem Anschlußstück (13, 24, 34) an der anderen Stirnöffnung des Rohres verbunden ist, wobei mindestens der vordere Stirnbereich des Rohrs mit einem elektrisch isolierenden Kunstharz zum Fixieren sowohl des Silber-Silberchlorid-Drahtes (12, 27, 36) als auch des Fadenelements (11, 26, 35) durch Kontakt mit diesen und zum Verschließen des Rohrs (15, 25, 35) gefüllt ist, sowie eine interne Lösung umfaßt, die in die Poren des vorgefertigten Fadenelementes (11, 26, 35) gesaugt worden ist und durch die Kapillarität dieses Bauteils festgehalten wird.

2. Apparat nach Anspruch 1, wobei die potentiometrische Elektrode ein ionensensitiver Feldeffekttransistor mit einem Sensor-Gate ist.

3. Apparat nach Anspruch 1, wobei die potentiometrische Elektrode ein mehrfach-ionensensitiver Feldeffekttransistor mit zwei oder mehreren Sensor-Gates ist.

4. Apparat nach einem der Ansprüche 1 bis 3, wobei das poröse Fadenelement (11, 26, 35) aus einem hydrophilen Polymer aufgebaut ist.

5. Apparat nach einem der Ansprüche 1 bis 3, wobei das poröse Fadenelement (11, 26, 35) eine Hohlfaser ist und der vordere Endabschnitt des Silber-Silberchlorid-Drahtes in den hohlen Teil der Hohlfaser eingeführt und darin befestigt ist.

6. Apparat nach Anspruch 5, wobei die Hohlfaser eine Membran mit einer Dicke von 10 bis 500 μm und im wesentlichen gleichmäßig über ihren Querschnitt verteilte Mikroporen mit einem mittleren Durchmesser von 0,02 bis 2 μm aufweist.

7. Apparat nach einem der Ansprüche 1 bis 6, wobei die potentiometrische Elektrode in einem von mindestens zwei unabhängigen Hohlräumen eines rohrförmigen Gehäuses (25, 30) angeordnet ist und eine an einer Stirnseite des Gehäuses herausragende Meßzone (20, 21, 30) für eine chemische Substanz sowie einen Leiterdraht (23, 33) aufweist, der am einen Ende an die Elektrode angeschlossen ist und durch den Hohlraum zu dessen anderer Stirnseite verläuft, die mit einem Anschlußstück (24, 34) an einer Öffnung des rohrförmigen Gehäuses an dessen anderer Stirnseite verbunden ist, wobei die Elektrode mindestens an einer Leiterdraht-Verbindungsstelle mit einem elektrisch isolierenden Kunstharz (22, 32) zum Verschließen des Hohlraums gefüllt ist, und wobei der andere bzw. ein anderer Hohlraum des rohrförmigen Gehäuses als das die Bezugselektrode aunehmende Rohr dient.

8. Apparat nach Anspruch 7, wobei jede der zwei oder mehr auf unerschiedliche chemische Substanzen selektiv ansprechenden potentiometrischen Elektroden in einem der Hohlräume des rohrförmigen Gehäuses untergebracht ist.

**Revendications**

1. Appareil pour mesurer les quantités d'une ou plusieurs substances chimiques contenues dans une solution à tester, comprenant au moins une électrode potentiométrique (20, 31) capable de réagir sélectivement à une substance chimique spéficique, et une électrode de référence à jonction liquide (10) comprenant un tube (15, 25, 30) un élément filé préfabriqué poreux (11, 26, 35) contenue dans une ouverture de l'extrémité avant du tube (15, 25, 30) et ayant une capacité de pores de 0,2 cm³/g ou plus et dont la surface au moins est hydrophile, un fil d'argent-chlorure d'argent (12, 27, 36) contenu dans le tube (15, 25, 30), le fil (12, 27, 36) à un moins une extrémité étant en contact avec l'élément filé (11, 26, 35) et s'étendant le long du tube et étant relié à un connecteur (13, 24, 34) à l'autre ouverture extrême du tube, au moins la partie d'extrémité avant du tube étant remplie d'une résine électriquement isolante pour fixer le fil d'argent—chlorure d'argent (12, 27, 36) et l'élément filé (11, 26, 35) par contact avec eux et pour fermer le tube (15, 25, 30) et une solution interne ayant été aspirée dans les pores de l'élément filé préfabriqué (11, 26, 35) et retenue par la capillarité dudit élément.

2. Appareil selon la revendication 1 dans lequel l'électrode potentiométrique est un transistor à effet de champ sensible aux ions ayant une grille détectrice.

3. Appareil selon la revendication 1 dans lequel l'électrode potentiométrique est un transistor à effet de champ sensible aux ions multiple ayant deux grilles détectrices ou plus.

4. Appareil selon l'une des revendications 1 à 3, dans lequel l'élément filé poreux (11, 26, 35) est constitué par un polymère hydrophile.

5. Appareil selon l'une des revendications 1 à 3 dans lequel l'élément filé poreux (11, 26, 35) est une fibre creuse et la partie extrême avant du fil d'argent—chlorure d'argent est insérée dans et fixée par la partie creuse de la fibre creuse.

6. Appareil selon la revendication 5 dans lequel la fibre creuse a une membrane épaisse de 10 à 500 µm et des micropores de 0,02 à 2 µm de diamètre moyen, répartis de façon sensiblement uniforme sur sa section transversale.

7. Appareil selon l'une des revendications 1 à 6, dans lequel l'électrode potentiométrique est contenue dans l'une d'au moins deux cavités indépendantes dans un corps tubulaire (25, 30) et aune zone de mesure d'une substance chimique (20, 31) qui fait saillie vers l'extérieur depuis une extrémité du corps tubulaire, un fil conducteur (23, 33) relié à une extrémité à l'électrode et s'étendant le long de ladite cavité jusqu'à son autre extrémité, qui est reliée à un connecteur (24, 34) au niveau d'une ouverture du corps tubulaire à son autre extrémité, et l'électrode est remplie d'une résine électriquement isolante (22, 32) au moins au niveau d'une jonction du fil conducteur pour fermer la cavité, et dans lequel la cavité ou une autre cavité du corps tubulaire sert de tube qui comprend l'électrode de référence à jonction liquide.

8. Appareil selon la revendication 7, dans lequel chacune des deux électrodes potentiométriques ou plus capables de réagir de façon sélective à différentes substances chimiques est contenue dans l'une des cavités du corps tubulaire.

## FIG.1

## FIG.2

## FIG.3

*FIG. 4*

*FIG. 5*

*FIG. 6*